(19) Europäisches Patentamt
European Patent Office
Office européen des brevets

(11) Veröffentlichungsnummer : **0 026 829**
**B1**

# (12) EUROPÄISCHE PATENTSCHRIFT

(45) Veröffentlichungstag der Patentschrift : **11.05.83**

(51) Int. Cl.$^3$ : **A 01 N 57/16**

(21) Anmeldenummer : **80104947.9**

(22) Anmeldetag : **20.08.80**

## (54) Ein Triazolderivat und ein Phosphorthioat enthaltende Schädlingsbekämpfungsmittel und deren Verwendung zur Bekämpfung von Schadinsekten und Akariden.

(30) Priorität : **30.08.79 DE 2934978**

(43) Veröffentlichungstag der Anmeldung : **15.04.81 Patentblatt 81/15**

(45) Bekanntmachung des Hinweises auf die Patenterteilung : **11.05.83 Patentblatt 83/19**

(84) Benannte Vertragsstaaten : **DE FR GB IT NL**

(56) Entgegenhaltungen :
**FR A 1 360 901**
**FR A 1 567 668**

(73) Patentinhaber : **HOECHST AKTIENGESELLSCHAFT**
**Postfach 80 03 20**
**D-6230 Frankfurt/Main 80 (DE)**

(72) Erfinder : **Bock, Klaus-Detlef, Dr.**
**Egerstrasse 2**
**D-6092 Kelsterbach (DE)**
Erfinder : **Baum, Horst, Dr.**
**O'Washika Road P.O. Box 25285**
**Nairobi (KE)**

**EP 0 026 829 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Ein Triazolderivat und ein Phosphorthioat enthaltende Schädlingsbekämpfungsmittel und deren Verwendung zur Bekämpfung von Schadinsekten und Akariden

Gegenstand der Erfindung sind Schädlingsbekämpfungsmittel — insbesondere insektizide und akarizide Mittel — die gekennzeichnet sind durch einen Gehalt an

I) 1-Phenyl-3-(0,0-diäthylthionophosphoryl)-1,2,4-triazol (common name: Triazophos) in Kombination mit

II) 0,0-Diäthyl-0-3,5,6-trichloro-2-pyridyl-phosphorothioat (common name: Chlorpyrifos).

Die Verbindung I' (Triazophos) der Formel

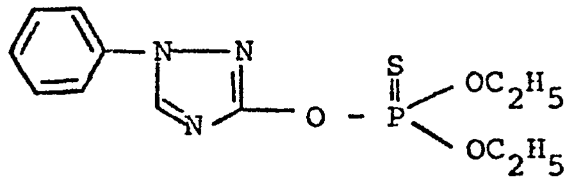

(I)

ist bereits bekannt als breit wirksames Insektizid und Akarizid gegen saugende und beißende Insekten und Spinnmilben sowie auch gegen Nematoden (vgl. z. B. Vulic, M. et al., VII Int. Congr. Plant Protection, Paris, 1970, Seite 123 (abstr.)).

Sie wird z. B. insbesondere eingesetzt zur Schädlingsbekämpfung in Baumwolle, Reis, Citrus, Obst und Gemüse.

Die Verbindung II (Chlorpyrifos) der Formel

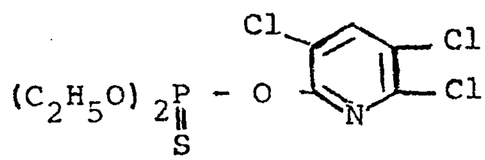

(II)

ist ebenfalls bekannt als breit wirksames Insektizid gegen beißende und saugende Insekten (vgl. z. B. US-PS 3 244 586). Sie wird insbesondere eingesetzt zur Schädlingsbekämpfung im Haushaltsektor, ferner gegen Bodenschädlinge und blattfressende Schadorganismen in Pflanzenkulturen.

Die Wirkung der Verbindungen I und II ist jedoch bei deren Einzelanwendung in manchen Fällen unzureichend, um wirtschaftlich bedeutende Schädlinge in den genannten Kulturen bzw. Anwendungsgebieten noch wirksam bekämpfen zu können.

So ist beispielsweise die Verbindung I (Triazophos) in niedrigen Konzentrationen, wie sie auf der Basis eines sinnvollen wirtschaftlichen Einsatzes sowie im Sinne einer möglichst umweltschonenden Schädlingsbekämpfung wünschenswert sind, gegen eine Reihe von beißenden Insekten nicht mehr ausreichend wirksam. Andererseits zeigt die Verbindung II (Chlorpyrifos) unzureichende Wirksamkeiten gegen einige saugende Schadinsekten sowie auch gegen Spinnmilben.

Es wurde nun gefunden, daß Kombinationen aus Triazophos und Chlorpyrifos sich durch eine synergistische Wirksamkeit, insbesondere gegen Insekten und Akariden auszeichnen. Das Mischungsverhältnis von Triazophos : Chlorpyrifos kann dabei im Bereich von 1 : 10 bis 10 : 1 liegen und beträgt vorzugsweise 1 : 1 bis 10 : 1.

Die erfindungsgemäß aus Kombinationen der genannten Wirkstoffe hergestellten Schädlingsbekämpfungsmittel besitzen gegenüber solchen Mitteln, die lediglich die Einzelwirkstoffe in entsprechenden Aktivsubstanzmengen enthalten, eine gesteigerte, d. h. überadditive synergistische Wirksamkeit, insbesondere gegen Insekten und Akariden. Es lassen sich daher mit den erfindungsgemäßen Wirkstoffkombinationen z. B. mit wesentlich niedrigeren Konzentrationen dieselben insektiziden und akariziden Wirkungen erzielen wie mit den jeweiligen Einzelkomponenten. Die erfindungsgemäßen Wirkstoffkombinationen können daher in einer Reihe von Anwendungsgebieten gegen wichtige Schädlinge mit Vorteil eingesetzt werden. Sie eignen sich z. B. besonders zur Bekämpfung von Leptidopteren, insbesondere Spodoptera littoralis, Heliothis spp. in Baumwolle, im Obst-, Citrus- und Gemüseanbau sowie im Acker- und Weinbau. Sie sind ferner in den genannten Kulturen mit Vorteil z. B. gegen Spinnmilben einsetzbar.

Die erfindungsgemäßen Wirkstoffmischungen können in Form üblicher Zubereitungen wie Emulsionskonzentraten, ULV-Lösungen, Dispersionen, Spritzpulvern, Stäuben oder Granulaten formuliert werden. Der Gesamtwirkstoffgehalt der marktfähigen Formulierungen beträgt dann ca. 10 bis 90 Gew.-%. Daneben enthalten sie die üblichen Haft-, Emulgier-, Netz-, Dispergier-, Füll- und Trägerstoffe. Für den praktischen Einsatz kommen aber auch Tankmischungen aus den einzelnen Wirkstoffkomponenten

in entsprechenden Mischungsverhältnissen in Frage. Auch eine nacheinander erfolgende Einzelausbringung der Komponenten ist ggfs. möglich. Emulgierbare Konzentrate werden durch Auflösen der Wirkstoffe in geeigneten organischen Lösungsmitteln erhalten. Als Lösungsmittel hierfür kommen beispielsweise in Frage: Toluol, Xylole, Chlorbenzole und andere höher siedende Aromaten, ferner Benzine oder Paraffinöle, Cyclohexanon, Dimethylformamid, Dimethylsulfoxid, Tetrahydrofuran, Dioxan, Diacetonalkohol, Äthylacetat, Isophoron.

Im Falle von « Ultra-Low-Volume » (ULV)-Formulierungen wendet man zweckmäßigerweise hochsiedende Lösungsmittel an, um die Verdunstungsrate beim Versprühen gering zu halten, z. B. höher siedende Paraffine, Ketone oder Ester sowie evtl. pflanzliche Öle.

Als Trägermaterialen für feste Formulierungen kommen vor allem mineralische Stoffe in Frage, z. B. Kieselsäuren und Silikate wie Kieselgur, Kaoline, Tonerden oder Talkum, Kreide oder Kieselkreiden, aber auch Zubereitungen dieser mineralischen Stoffe mit Hilfszusätzen wie Stearaten, Alkyl-, Aryl- oder Alkylarylsulfonaten, Ligninsulfonaten und ähnlichem. Darüber hinaus können weitere Netz-, Dispergier- und Haftstoffe sowie Mahlhilfsmittel der verschiedensten Art zum Zwecke der anwendungsspezifischen Formulierung verwendet werden.

Vor der eigentlichen Anwendung werden die genannten Emulsionskonzentrate, Spritzpulver oder Dispersionen mit einem geeigneten Verdünnungsmittel — gewöhnlich Wasser — weiter verdünnt und so auf eine für praktische Anwendung geeignete Konzentration gebracht. Diese variiert wie üblich mit der Anwendungsart und den Klimabedingungen, insbesondere Temperatur und Feuchtigkeit, liegt jedoch allgemein, z. B. bei Spritzpulvern, im Bereich von 0,005 bis 1,0 Gew.-% Gesamtwirkstoffanteil.

Die erfindungsgemäßen Schädlingsbekämpfungsmittel besitzen eine ausgezeichnete Wirkung gegen Schadinsekten sowie gegen Akariden und können in weit geringeren Mengen bzw. Konzentrationen mit Erfolg eingesetzt werden als Schädlingsbekämpfungsmittel, die nur eine der beiden Wirkstoffkomponenten allein enthalten.

## Formulierungsbeispiele

### Beispiel 1

Emulsionskonzentrat (Gew.-Verhältnis Triazophos : Chlorpyrifos = 10 : 1)

4,0 Gewichtsteile Chlorpyrifos
40,0 Gewichtsteile Triazophos
5,0 Gewichtsteile Calcium-dodecylbenzolsulfonat
7,4 Gewichtsteile Rizinusölpolyglykoläther (40 AeO)*)
1,6 Gewichtsteile Tributylphenylpolyglykoläther (50 AeO)
42,0 Gewichtsteile Xylol

*) Anzahl AeO = Anzahl Äthylenoxydeinheiten im Polyglykoläthermolekül

### Beispiel 2

Emulsionskonzentrat (Gew.-Verhältnis Triazophos : Chlorpyrifos = 1 : 10)

40,0 Gewichtsteile Chlorpyrifos
4,0 Gewichtsteile Triazophos
3,0 Gewichtsteile Calcium-dodecylbenzolsulfonat
2,0 Gewichtsteile Rizinusölpolyglykoläther (36 AeO)
51,0 Gewichtsteile Xylol

### Beispiel 3

Eine Tankmischung wird erhalten durch Vermischen von Triazophos (I) in Form eines 40 Gew.-% Wirkstoff enthaltenden Emulsionskonzentrates und Chlorpyrifos (II) in Form eines 50 Gew.-% Wirkstoff enthaltenden Spritzpulvers, wobei das Wirkstoffverhältnis I : II = 1 : 1 beträgt, in einer solchen Menge von Wasser, daß in der fertigen Spritzbrühe die Konzentration an Wirkstoffgemisch (I + II) unter Anpassung an die durch die Applikationsmethode und die Pflanzenkultur jeweils bedingten Erfordernisse etwa 0,2 bis 5,6 Gew.-% beträgt.

## Biologische Beispiele

### Beispiel 4

Larven des Baumwollschädlings Spodoptera littoralis BOISD. im 3. Entwicklungsstadium und deren Futter (Phaseolus vulgaris-Blätter) wurden im Labor separat jeweils mit den in der nachstehenden

Tabelle 1 genannten und in Wasser emulgierten oder suspendierten Wirkstoffen bzw. Wirkstoffkombinationen in den angegebenen Konzentrationen (Gew.-%) tropfnaß gespritzt.

Nach Antrocknen der Spritzbeläge wurden die behandelten Larven auf die behandelten und trockenen Blätter gesetzt.

Der Effekt der Wirkstoffe bzw. deren Gemische wurde nach 3 Stunden (Initialwirkung) bzw. nach 48 Stunden beurteilt und erbrachte die in der Tabelle 1 angegebenen Werte (Abtötung in %).

Tabelle 1

1.1 Mischungsverhältnis der Verbindungen I:II = 1,9 : 1 (Gew.-teile).

| Behandlung mit | Wirkstoffkonz. (Gew.-%) | % Abtötung nach 3 Stunden |
|---|---|---|
| Verbindung I | 0,0024 | 10 |
| Verbindung II | 0,001248 | 15 |
| Verbindung I + Verbindung II | 0,0024 + 0,001248 | 75 |

1.2 Mischungsverhältnis der Verbindungen I:II = 1,7 : 1 (Gew.-teile).

| Behandlung mit | Wirkstoffkonz. (Gew.-%) | % Abtötung nach 48 Stunden |
|---|---|---|
| Verbindung I | 0,00012 | 0 |
| Verbindung II | 0,000072 | 5 |
| Verbindung I + Verbindung II | 0,00012 + 0,000072 | 30 |

1.3 Mischungsverhältnis der Verbindungen I:II = 3,3 : 1 (Gew.-teile).

| Behandlung mit | Wirkstoffkonz. (Gew.-%) | % Abtötung nach 48 Stunden |
|---|---|---|
| Verbindung I | 0,00012 | 0 |
| Verbindung II | 0,000036 | 0 |
| Verbindung I + Verbindung II | 0,00012 + 0,000036 | 70 |

1.4 Mischungsverhältnis der Verbindungen I:II = 1 : 1,2 (Gew.-teile).

| Behandlung mit | Wirkstoffkonz. (Gew.-%) | % Abtötung nach 48 Stunden |
|---|---|---|
| Verbindung I | 0,00012 | 0 |
| Verbindung II | 0,000144 | 5 |
| Verbindung I + Verbindung II | 0,00012 + 0,000144 | 40 |

Beispiel 5

Im Freiland wurden Baumwollpflanzen mit den in der nachstehenden Tabelle 2 genannten und in Wasser emulgierten oder suspendierten Wirkstoffen bzw. Wirkstoffkombinationen in den angegebenen Mengen (kg Aktivsubstanz (= AS) pro Hektar) besprüht. Nach Antrocknen der Spritzbeläge wurden die Blätter eingesammelt und im Labor Larven von Spodoptera littoralis BOISD. im 2. (= $L_2$) und 4. (= $L_4$) Entwicklungsstadium als Futter angeboten. Nach 24 Stunden wurde erstmals der Effekt beurteilt. Eine weitere Kontrolle erfolgte nach weiteren 24 Stunden. Das Ergebnis (in % Abtötung) ist in der Tabelle 2 zusammengefaßt.

Tabelle 2

2.1 Mischungsverhältnis der Verbindungen I:II = 1,4 : 1 (Gew.-teile).

| Behandlung mit | Wirkstoffmenge kg AS pro ha | % Abtötung nach 24 h | | 48 h | |
|---|---|---|---|---|---|
| | | $L_2$ | $L_4$ | $L_2$ | $L_4$ |
| Verbindung I | 0,84 | 0 | 0 | 0 | 0 |
| Verbindung II | 0,6 | 0 | 0 | 0 | 0 |
| Verbindung I + Verbindung II | 0,84 + 0,6 | 80 | 70 | 100 | 100 |

2.2 Mischungsverhältnis der Verbindungen I:II = 1,6 : 1 (Gew.-teile).

| | | | | | |
|---|---|---|---|---|---|
| Verbindung I | 0,84 | 0 | 0 | 0 | 0 |
| Verbindung II | 0,72 | 5 | 0 | 5 | 0 |
| Verbindung I + Verbindung II | 0,84 + 0,72 | 90 | 80 | 100 | 100 |

2.3 Mischungsverhältnis der Verbindungen I:II = 1 : 1 (Gew.-teile).

| | | | | | |
|---|---|---|---|---|---|
| Verbindung I | 0,84 | 0 | 0 | 0 | 0 |
| Verbindung II | 0,84 | 10 | 5 | 10 | 5 |
| Verbindung I + Verbindung II | 0,84 + 0,84 | 100 | 80 | 100 | 100 |

2.4 Mischungsverhältnis der Verbindungen I:II = 1 : 1,14 (Gew.-teile).

| | | | | | |
|---|---|---|---|---|---|
| Verbindung I | 0,84 | 0 | 0 | 0 | 0 |
| Verbindung II | 0,96 | 15 | 10 | 17 | 14 |
| Verbindung I + Verbindung II | 0,84 + 0,96 | 100 | 100 | 100 | 100 |

2.5 Mischungsverhältnis der Verbindungen I:II = 10 : 1 (Gew.-teile).

| | | | | | |
|---|---|---|---|---|---|
| Verbindung I | 1,2 | 10 | 5 | 20 | 8 |
| Verbindung II | 0,12 | 0 | 0 | 0 | 0 |

Fortsetzg. v. Tab. 2

| Behandlung mit | Wirkstoffmenge kg AS pro ha | % Abtötung nach 24 h | | 48 h | |
|---|---|---|---|---|---|
| | | $L_2$ | $L_4$ | $L_2$ | $L_4$ |
| Verbindung I + Verbindung II | 1,2 + 0,12 | 60 | 45 | 80 | 70 |
| **2.6 Mischungsverhältnis der Verbindungen I:II = 1 : 10 (Gew.-teile).** | | | | | |
| Verbindung I | 0,07 | 0 | 0 | 0 | 0 |
| Verbindung II | 0,7 | 15 | 5 | 6 | 5 |
| Verbindung I + Verbindung II | 0,07 + 0,7 | 50 | 45 | 65 | 70 |

## Ansprüche

1. Schädlingsbekämpfungsmittel, gekennzeichnet durch einen Gehalt an 1-Phenyl-3-(0,0-diäthylthionophosphoryl)-1,2,4-triazol (I) in Kombination mit 0,0-Diäthyl-0-3,5,6-trichloro-2-pyridyl-phosphorothioat (II).

2. Schädlingsbekämpfungsmittel gemäß Anspruch 1, dadurch gekennzeichnet, daß das Gewichtsverhältnis der Komponenten I und II 1 : 10 bis 10 : 1 beträgt.

3. Schädlingsbekämpfungsmittel gemäß Ansprüche 1 und 2, dadurch gekennzeichnet, daß das Gewichtsverhältnis der Komponenten I und II 1 : 1 bis 10 : 1 beträgt.

4. Schädlingsbekämpfungsmittel, dadurch gekennzeichnet, daß sie 0,005 bis 90 Gew.-% einer Wirkstoffkombination gemäß Ansprüchen 1 bis 3 enthalten und der Rest zu 100 Gew.-% aus üblichen Formulierungshilfsmitteln besteht.

5. Verwendung von Mitteln gemäß den Ansprüchen 1 bis 4 zur Bekämpfung von Insekten und Akariden.

6. Verfahren zur Bekämpfung von Schadinsekten und Akariden, dadurch gekennzeichnet, daß man die von ihnen befallenen Pflanzen, Flächen oder Substrate mit Wirkstoffkombinationen gemäß Ansprüchen 1 bis 5 in insektizid und akarizid wirksamen Mengen behandelt.

## Claims

1. Pesticidal compositions characterized by a content of 1-phenyl-3-(0,0-diethylthionophosphoryl)-1,2,4-triazole (I) in combination with 0,0-diethyl-0-3,5,6-trichloro-2-pyridyl-phosphorothioate (II).

2. Pesticidal compositions as claimed in claim 1, wherein the weight ratio of component I to component II is in the range of from 1 : 10 to 10 : 1.

3. Pesticidal compositions as claimed in claims 1 and 2, wherein the weight ratio of component I to component II is in the range of from 1 : 1 to 10 : 1.

4. Pesticidal compositions containing of from 0,005 to 90 weight % of a combination of active ingredients as claimed in claims 1 to 3 and for the remainder to 100 weight % the usual formulation auxiliaries.

5. Method of using the compositions as claimed in claims 1 to 4 for combatting insects and acarides.

6. Process for combatting insect pests and acarides, which comprises treating the plants, areas or substrates infested thereby with a combination of active ingredients as claimed in claims 1 to 5 in amounts sufficient to attain an insecticidal or acaricidal effect.

## Revendications

1. Produits antiparasitaires caractérisés en ce qu'ils contiennent du phényl-1 (0,0-diéthylthionophosphoryl)-3 triazole-1,2,4 (composé I) associé à du phosphorothioate de 0,0-diéthyle et de 0-(trichloro-3,5,6 pyridyle-2) (composé II).

2. Produits antiparasitaires selon la revendication 1, caractérisés en ce que le rapport pondéral entre les constituants I et II se situe entre 1 : 10 et 10 : 1.

3. Produits antiparasitaires selon l'une des revendications 1 et 2, caractérisés en ce que le rapport pondéral entre les constituants I et II se situe entre 1 : 1 et 10 : 1.

4. Produits antiparasitaires caractérisés en ce qu'ils renferment de 0,005 à 90 % en poids d'une association de matières actives selon l'une quelconque des revendications 1 à 3 et, pour le complément à 100 % en poids, des auxiliaires de formulation usuels.

5. Utilisation des produits selon l'une quelconque des revendications 1 à 4 pour combattre des insectes et des acarides.

6. Procédé pour combattre des insectes nuisibles et des acarides, caractérisé en ce qu'on traite par une association de matières actives selon l'une quelconque des revendications 1 à 5 les plantes, surfaces ou substrats attaqués par ces parasites, en des quantités efficaces du point de vue insecticide et acaricide.